# EUROPEAN PATENT SPECIFICATION

(11) **EP 3 997 177 B1**
(45) Date of publication and mention of the grant of the patent: **28.08.2024**
(21) Application number: 20743548.8
(22) Date of filing: 07.07.2020
(51) Int. Cl.: C08L 95/00, C08L 97/00

(54) **ADHESION PROMOTERS COMPRISING OLIGOMERIC SILANES AND METHODS OF USING THE SAME**
KLEBEVERSTÄRKER ENTHALTEND OLIGOMERE SILANE UND METHODEN ZU DEREN VERWENDUNG
PROMOTEURS D'ADHÉRENCE COMPRENANT DES SILANES OLIGOMERIQUES ET METHODS D'UTILISATION DES CEUX-CI

(30) Priority: 08.07.2019 US 201962871261 P
(43) Date of publication of application: 18.05.2022
(73) Proprietor: Heritage Research Group, LLC, Indianapolis, IN 46278 (US)
(72) Inventor: BAKEIS, Steven Michael, Lafayette, IN 47906 (US); WOODWORTH, Benjamin, Franklin, IN 46131 (US); GORMAN, William B., Mooresville, IN 46158 (US); KRIECH, Anthony J., Indianapolis, IN 46278 (US)
(74) Representative: Hamer, Christopher K.
(86) International application number: PCT/US2020/040959
(87) International publication number: WO 2021/007191

(56) References cited:
- WO-A1-2010/128105
- WO-A1-2018/053250
- WO-A2-2010/073261

## Description

### FIELD

The present disclosure relates to oligomeric silane-containing compositions, and the use of alkoxysilanes as asphaltic binder compositions. Exemplary uses include the treatment of mineral aggregates with oligomeric alkoxysilanes to promote adhesion of asphaltic compounds.

### BACKGROUND

A wide variety of silicon compounds including silanes have been used for the impregnation and surface treatment of glass fibers to promote the adhesion of various organic resins such as the polyester resins, epoxide resins or phenol formaldehyde resins and for the surface treatment of textiles, leathers, ceramics and glass materials. Certain halo- and alkoxysilane monomers have similarly been described as being suitable to promote the adhesion of asphalt binders to aggregates. However, monomeric silicon-based adhesion promoters may suffer from several setbacks, including high volatility due to lower boiling points, as well as decreased adhesion properties after the passage of time. Accordingly, there remains a need to develop improved adhesion promoters.

### SUMMARY

There is provided an asphalt binder composition, comprising:
at least one oligomeric silane; and
a bituminous material;
wherein the oligomeric silane comprises at least one compound of Formula I: 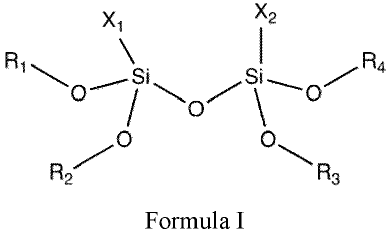 wherein
X₁, X₂, and X₃ are independently selected from haloalkyl, alkylaminoalkyl, and aminoalkyl, each of which is optionally substituted; and
R₁, R₂, R₃, R₄, R₅, and R₆ are, independently for each occurrence, selected from hydrogen, optionally substituted alkyl, and a residue of Formula II: 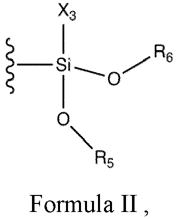
and salts of Formula I.

Described herein are compositions comprising an oligomeric silane and a substrate. In certain embodiments, the substrate is an aggregate material, and the oligomeric silane can permit better adhesion of bituminous materials to the aggregate for use in asphalt applications.

### BRIEF DESCRIPTION OF THE DRAWINGS

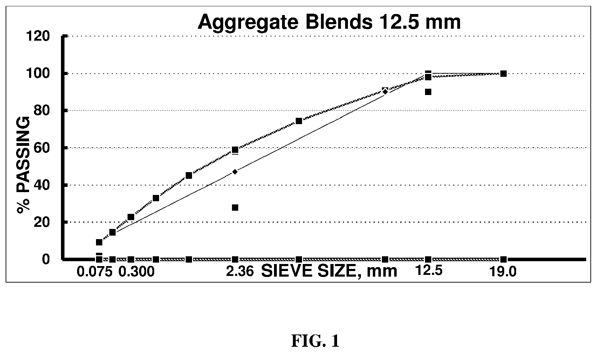

**FIG.** 1 is a chart representing % Passing: Sieve Size for the testing aggregates.

### DETAILED DESCRIPTION

As used in the present specification, the following words, phrases and symbols are generally intended to have the meanings as set forth below, except to the extent that the context in which they are used indicates otherwise. The following abbreviations and terms have the indicated meanings throughout:

"Asphalt" refers to a composite material comprising a bituminous binder and aggregate, which is generally used for paving applications. Such asphalt is also known as "asphalt concrete." Examples of asphalt grades used in paving applications include stone mastic asphalt, soft asphalt, hot rolled asphalt, dense-graded asphalt, gap-graded asphalt, porous asphalt, mastic asphalt, and other asphalt types. Typically, the total amount of bituminous binder in asphalt is from 1 to 10 wt.% based on the total weight of the asphalt, in some cases from 2.5 to 8.5 wt.% and in some cases from 4 to 7.5 wt.%.

"Aggregate" (or "construction aggregate") is particulate mineral material suitable for use in asphalt. It generally comprises sand, gravel, crushed stone, and slag. Any conventional type of aggregate suitable for use in asphalt can be used. Examples of suitable aggregates include granite (siliceous), limestone (calcareous), gravel, and mixturesthereof.

"Bitumen" or (or a material described as "bituminous") refers to a mixture of viscous organic liquids or semi-solids from crude oil that is black, sticky, soluble in carbon disulfide, and composed primarily of condensed aromatic hydrocarbons. Alternatively, bitumen refers to a mixture of maltenes and asphaltenes. Bitumen may be any conventional type of bitumen known to the skilled person. The bitumen may be naturally occurring. It may be crude bitumen, or it may be refined bitumen obtained as the bottom residue from vacuum distillation of crude oil, thermal cracking, or hydrocracking.

The bitumen may be commercially available virgin bitumen such as paving grade bitumen, e.g., bitumen suitable for paving applications. Examples of commercially available paving grade bitumen include, for instance, bitumen which in the penetration grade (PEN) classification system are referred to as PEN 10/20, 20/30, 30/45, 35/50, 40/60 and 70/100 or bitumen which in the performance grade (PG) classification system are referred to as PG 64-22, 58-22, 70-22 and 64-28.

Such bitumen is available from, for instance, Shell, Total, and British Petroleum (BP). In the PEN classification, the numeric designation refers to the penetration range of the bitumen as measured with the EN 1426 method, *e.g.,* a 40/60 PEN bitumen corresponds to a bitumen with a penetration which ranges from 40 to 60 decimillimeters (dmm). In the PG classification (AASHTO MP 1 specification), the first value of the numeric designation refers to the temperature performance and the second value refers to the low-temperature performance as measured by a method which is known in the art as the Superpave^{SM} system.

The bitumen may also be contained in or obtained from reclaimed asphalt shingles or reclaimed asphalt pavement, and is referred to as bitumen of RAS or RAP origin, respectively.

"Binder" refers to a combination of bitumen and, optionally, other components such as elastomers, non-bituminous binders, adhesion promoters, softening agents, or other suitable additives. Useful elastomers include, for example, ethylene-vinyl acetate copolymers, polybutadienes, ethylene-propylene copolymers, ethylene-propylene-diene terpolymers, butadiene-styrene block copolymers, butadiene-styrene-butadiene (*i.e.,* butadiene end-capped) (BSB) copolymers, styrene-butadiene-styrene (SBS) block terpolymers, isoprene-styrene block copolymers and styrene-isoprene-styrene (SIS) block terpolymers, or the like. Exemplary polymeric materials include radial and linear block copolymers, such as those described in U.S. Patent No. 8,580,874. Cured elastomer additives may include ground tire rubber materials. In one embodiment, the additional additives may be added to an asphalt binder in amounts ranging from about 0.1 wt.% to about 10 wt.%. The term bitumen is sometimes used interchangeably with binder.

"Virgin binder" is binder that has not been used previously for road paving or "Virgin bitumen" (also known as "fresh bitumen") refers to bitumen that has not been used, e.g., bitumen that has not been recovered from road pavement or reclaimed shingles. Virgin bitumen is a component of virgin binder.

"Virgin asphalt" refers to a combination of virgin aggregate with virgin bitumen or virgin binder. Virgin asphalt has not been used previously for paving.

"Reclaimed asphalt" generally includes reclaimed asphalt shingles (RAS), reclaimed asphalt pavement (RAP), reclaimed asphalt from plant waste, reclaimed asphalt from roofing felt, and asphalt from other applications.

"Reclaimed asphalt shingles" (RAS) are asphalt compositions that have been used previously as roofing material or have been recovered as waste from shingle manufacturing. RAS recovered from these sources is processed by well-known methods, including milling, ripping, breaking, crushing, and/or pulverizing.

"Reclaimed asphalt pavement" (RAP) is asphalt that has been used previously as pavement. RAP may be obtained from asphalt that has been removed from a road or other structure, and then has been processed by well-known methods. Prior to use, the RAP may be inspected, sized and selected, for instance, depending on the final paving application.

A dash ("-") that is not between two letters or symbols is used to indicate a point of attachment for a substituent. For example, -C(O)NH₂ is attached through the carbon atom.

"Alkoxy" by itself or as part of another substituent refers to a radical -OR³¹ where R³¹ is alkyl, cycloalkyl, cycloalkylalkyl, aryl, or arylalkyl, which can be substituted, as defined herein. In some embodiments, alkoxy groups have from 1 to 8 carbon atoms. In some embodiments, alkoxy groups have 1, 2, 3, 4, 5, 6, 7, or 8 carbon atoms. Examples of alkoxy groups include, but are not limited to, methoxy, ethoxy, propoxy, butoxy, cyclohexyloxy, and the like.

"Alkyl" by itself or as part of another substituent refers to a saturated or unsaturated, branched, or straight-chain (linear) monovalent hydrocarbon radical derived by the removal of one hydrogen atom from a single carbon atom of a parent alkane, alkene, or alkyne. Examples of alkyl groups include, but are not limited to, methyl; ethyls such as ethanyl, ethenyl, and ethynyl; propyls such as propan-1-yl, propan-2-yl, prop-1-en-1-yl, prop-1-en-2-yl, prop-2-en-1-yl (allyl), prop-1-yn-1-yl, prop-2-yn-1-yl, *etc*.; butyls such as butan-1-yl, butan-2-yl, 2-methyl-propan-1-yl, 2-methyl-propan-2-yl, but-1-en-1-yl, but-1-en-2-yl, 2-methyl-prop-1-en-1-yl, but-2-en-1-yl, but-2-en-2-yl, buta-1,3-dien-1-yl, buta-1,3-dien-2-yl, but-1-yn-1-yl, but-1-yn-3-yl, but-3-yn-1-yl, *etc*.; and the like.

Unless otherwise indicated, the term "alkyl" is specifically intended to include groups having any degree or level of saturation, i.e., groups having exclusively single carbon-carbon bonds, groups having one or more double carbon-carbon bonds, groups having one or more triple carbon-carbon bonds, and groups having mixtures of single, double, and triple carbon-carbon bonds. Where a specific level of saturation is intended, the terms "alkanyl," "alkenyl," and "alkynyl" are used. In certain embodiments, an alkyl group comprises from 1 to 40 carbon atoms, in certain embodiments, from 1 to 22 or 1 to 18 carbon atoms, in certain embodiments, from 1 to 16 or 1 to 8 carbon atoms, and in certain embodiments from 1 to 6 or 1 to 3 carbon atoms. In certain embodiments, an alkyl group comprises from 8 to 22 carbon atoms, in certain embodiments, from 8 to 18 or 8 to 16. In some embodiments, the alkyl group comprises from 3 to 20 or 7 to 17 carbons. In some embodiments, the alkyl group comprises 1, 2, 3, 4, 5, 6, 7, 8, 9, 10, 11, 12, 13, 14, 15, 16, 17, 18, 19, 20, 21, or 22 carbon atoms.

"Aryl" by itself or as part of another substituent refers to a monovalent aromatic hydrocarbon radical derived by the removal of one hydrogen atom from a single carbon atom of a parent aromatic ring system. Aryl encompasses 5- and 6-membered carbocyclic aromatic rings, for example, benzene; bicyclic ring systems wherein at least one ring is carbocyclic and aromatic, for example, naphthalene, indane, and tetralin; and tricyclic ring systems wherein at least one ring is carbocyclic and aromatic, for example, fluorene. Aryl encompasses multiple ring systems having at least one carbocyclic aromatic ring fused to at least one carbocyclic aromatic ring, cycloalkyl ring, or heterocycloalkyl ring. For example, aryl includes 5- and 6-membered carbocyclic aromatic rings fused to a 5- to 7-membered non-aromatic heterocycloalkyl ring containing one or more heteroatoms chosen from N, O, and S. For such fused, bicyclic ring systems wherein only one of the rings is a carbocyclic aromatic ring, the point of attachment may be at the carbocyclic aromatic ring or the heterocycloalkyl ring. Examples of aryl groups include, but are not limited to, groups derived from aceanthrylene, acenaphthylene, acephenanthrylene, anthracene, azulene, benzene, chrysene, coronene, fluoranthene, fluorene, hexacene, hexaphene, hexalene, as-indacene, s-indacene, indane, indene, naphthalene, octacene, octaphene, octalene, ovalene, penta-2,4-diene, pentacene, pentalene, pentaphene, perylene, phenalene, phenanthrene, picene, pleiadene, pyrene, pyranthrene, rubicene, triphenylene, trinaphthalene, and the like. In certain embodiments, an aryl group can comprise from 5 to 20 carbon atoms, and in certain embodiments, from 5 to 12 carbon atoms. In certain embodiments, an aryl group can comprise 5, 6, 7, 8, 9, 10, 11, 12, 13, 14, 15, 16, 17, 18, 19, or 20 carbon atoms. Aryl, however, does not encompass or overlap in any way with heteroaryl, separately defined herein. Hence, a multiple ring system in which one or more carbocyclic aromatic rings is fused to a heterocycloalkyl aromatic ring, is heteroaryl, not aryl, as defined herein.

"Arylalkyl" by itself or as part of another substituent refers to an acyclic alkyl radical in which one of the hydrogen atoms bonded to a carbon atom, typically a terminal or *sp³* carbon atom, is replaced with an aryl group. Examples of arylalkyl groups include, but are not limited to, benzyl, 2-phenylethan-1-yl, 2-phenylethen-1-yl, naphthylmethyl, 2-naphthylethan-1-yl, 2-naphthylethen-1-yl, naphthobenzyl, 2-naphthophenylethan-1-yl, and the like. Where specific alkyl moieties are intended, the nomenclature arylalkanyl, arylalkenyl, or arylalkynyl is used. In certain embodiments, an arylalkyl group is C₇₋₃₀ arylalkyl, e.g., the alkanyl, alkenyl, or alkynyl moiety of the arylalkyl group is C₁₋₁₀ and the aryl moiety is C₆₋₂₀, and in certain embodiments, an arylalkyl group is C₇₋₂₀ arylalkyl, e.g., the alkanyl, alkenyl, or alkynyl moiety of the arylalkyl group is C₁₋₈ and the aryl moiety is C₆₋₁₂.

"Compounds" refers to compounds and residues encompassed by structural Formula I-III herein and includes any specific compounds within the formula whose structure is disclosed herein. Compounds may be identified either by their chemical structure and/or chemical name. When the chemical structure and chemical name conflict, the chemical structure is determinative of the identity of the compound. The compounds described herein may contain one or more chiral centers and/or double bonds and therefore may exist as stereoisomers such as double-bond isomers (i.e., geometric isomers), enantiomers, or diastereomers. Accordingly, any chemical structures within the scope of the specification depicted, in whole or in part, with a relative configuration encompass all possible enantiomers and stereoisomers of the illustrated compounds including the stereoisomerically pure form (e.g., geometrically pure, enantiomerically pure, or diastereomerically pure) and enantiomeric and stereoisomeric mixtures. Enantiomeric and stereoisomeric mixtures may be resolved into their component enantiomers or stereoisomers using separation techniques or chiral synthesis techniques well known to the skilled artisan.

For the purposes of the present disclosure, "chiral compounds" are compounds having at least one center of chirality (i.e. at least one asymmetric atom, in particular at least one asymmetric C atom), having an axis of chirality, a plane of chirality or a screw structure. "Achiral compounds" are compounds which are not chiral.

Compounds and residues of Formula I-III include, but are not limited to, optical isomers of compounds and residues of Formula I-III, racemates thereof, and other mixtures thereof. In such embodiments, the single enantiomers or diastereomers, *i.e.,* optically active forms, can be obtained by asymmetric synthesis or by resolution of the racemates. Resolution of the racemates may be accomplished by, for example, chromatography, using, for example a chiral high-pressure liquid chromatography (HPLC) column. However, unless otherwise stated, it should be assumed that Formula I-III cover all asymmetric variants of the compounds described herein, including isomers, racemates, enantiomers, diastereomers, and other mixtures thereof. In addition, compounds of Formula I-III include Z- and E-forms (*e.g*., cis- and trans-forms) of compounds with double bonds. The compounds of Formula I-III may also exist in several tautomeric forms including the enol form, the keto form, and mixtures thereof. Accordingly, the chemical structures depicted herein encompass all possible tautomeric forms of the illustrated compounds.

"Cycloalkyl" by itself or as part of another substituent refers to a saturated or unsaturated cyclic alkyl radical. Where a specific level of saturation is intended, the nomenclature "cycloalkanyl" or "cycloalkenyl" is used. Examples of cycloalkyl groups include, but are not limited to, groups derived from cyclopropane, cyclobutane, cyclopentane, cyclohexane, and the like. In certain embodiments, a cycloalkyl group is C₃₋₁₅ cycloalkyl, and in certain embodiments, C₃₋₁₂ cycloalkyl or C₅₋₁₂ cycloalkyl. In certain embodiments, a cycloalkyl group is a C₅, C₆, C₇, C₈, C₉, C₁₀, C₁₁, C₁₂, C₁₃, C₁₄, or C₁₅ cycloalkyl.

"Cycloalkylalkyl" by itself or as part of another substituent refers to an acyclic alkyl radical in which one of the hydrogen atoms bonded to a carbon atom, typically a terminal or *sp³* carbon atom, is replaced with a cycloalkyl group. Where specific alkyl moieties are intended, the nomenclature cycloalkylalkanyl, cycloalkylalkenyl, or cycloalkylalkynyl is used. In certain embodiments, a cycloalkylalkyl group is C₇₋₃₀ cycloalkylalkyl, e.g., the alkanyl, alkenyl, or alkynyl moiety of the cycloalkylalkyl group is C₁₋₁₀ and the cycloalkyl moiety is C₆₋₂₀, and in certain embodiments, a cycloalkylalkyl group is C₇₋₂₀ cycloalkylalkyl, *e.g*., the alkanyl, alkenyl, or alkynyl moiety of the cycloalkylalkyl group is C₁₋₈ and the cycloalkyl moiety is C₄₋₂₀ or C₆₋₁₂.

"Halogen" refers to a fluoro, chloro, bromo, or iodo group.

"Heteroaryl" by itself or as part of another substituent refers to a monovalent heteroaromatic radical derived by the removal of one hydrogen atom from a single atom of a parent heteroaromatic ring system. Heteroaryl encompasses multiple ring systems having at least one aromatic ring fused to at least one other ring, which can be aromatic or non-aromatic in which at least one ring atom is a heteroatom. Heteroaryl encompasses 5- to 12-membered aromatic, such as 5- to 7-membered, monocyclic rings containing one or more, for example, from 1 to 4, or in certain embodiments, from 1 to 3, heteroatoms chosen from N, O, and S, with the remaining ring atoms being carbon; and bicyclic heterocycloalkyl rings containing one or more, for example, from 1 to 4, or in certain embodiments, from 1 to 3, heteroatoms chosen from N, O, and S, with the remaining ring atoms being carbon and wherein at least one heteroatom is present in an aromatic ring. For example, heteroaryl includes a 5- to 7-membered heterocycloalkyl, aromatic ring fused to a 5- to 7-membered cycloalkyl ring. For such fused, bicyclic heteroaryl ring systems wherein only one of the rings contains one or more heteroatoms, the point of attachment may be at the heteroaromatic ring or the cycloalkyl ring. In certain embodiments, when the total number of N, S, and O atoms in the heteroaryl group exceeds one, the heteroatoms are not adjacent to one another. In certain embodiments, the total number of N, S, and O atoms in the heteroaryl group is not more than two. In certain embodiments, the total number of N, S, and O atoms in the aromatic heterocycle is not more than one. Heteroaryl does not encompass or overlap with aryl as defined herein.

Examples of heteroaryl groups include, but are not limited to, groups derived from acridine, arsindole, carbazole, β-carboline, chromane, chromene, cinnoline, furan, imidazole, indazole, indole, indoline, indolizine, isobenzofuran, isochromene, isoindole, isoindoline, isoquinoline, isothiazole, isoxazole, naphthyridine, oxadiazole, oxazole, perimidine, phenanthridine, phenanthroline, phenazine, phthalazine, pteridine, purine, pyran, pyrazine, pyrazole, pyridazine, pyridine, pyrimidine, pyrrole, pyrrolizine, quinazoline, quinoline, quinolizine, quinoxaline, tetrazole, thiadiazole, thiazole, thiophene, triazole, xanthene, and the like. In certain embodiments, a heteroaryl group is from 5- to 20-membered heteroaryl, and in certain embodiments from 5- to 12-membered heteroaryl or from 5- to 10-membered heteroaryl. In certain embodiments, a heteroaryl group is a 5-, 6-, 7-, 8-, 9-, 10-, 11-, 12-, 13-, 14-, 15-, 16-, 17-, 18-, 19-, or 20-membered heteroaryl. In certain embodiments heteroaryl groups are those derived from thiophene, pyrrole, benzothiophene, benzofuran, indole, pyridine, quinoline, imidazole, oxazole, and pyrazine.

"Heteroarylalkyl" by itself or as part of another substituent refers to an acyclic alkyl radical in which one of the hydrogen atoms bonded to a carbon atom, typically a terminal or *sp³* carbon atom, is replaced with a heteroaryl group. Where specific alkyl moieties are intended, the nomenclature heteroarylalkanyl, heteroarylalkenyl, or heteroarylalkynyl is used. In certain embodiments, a heteroarylalkyl group is a 6- to 30-membered heteroarylalkyl, *e.g*., the alkanyl, alkenyl, or alkynyl moiety of the heteroarylalkyl is 1- to 10-membered and the heteroaryl moiety is a 5- to 20-membered heteroaryl, and in certain embodiments, 6- to 20-membered heteroarylalkyl, *e.g*., the alkanyl, alkenyl, or alkynyl moiety of the heteroarylalkyl is 1- to 8-membered and the heteroaryl moiety is a 5- to 12-membered heteroaryl.

"Heterocycloalkyl" by itself or as part of another substituent refers to a partially saturated or unsaturated cyclic alkyl radical in which one or more carbon atoms (and any associated hydrogen atoms) are independently replaced with the same or different heteroatom. Examples of heteroatoms to replace the carbon atom(s) include, but are not limited to, N, P, O, S, Si, *etc.* Where a specific level of saturation is intended, the nomenclature "heterocycloalkanyl" or "heterocycloalkenyl" is used. Examples of heterocycloalkyl groups include, but are not limited to, groups derived from epoxides, azirines, thiiranes, imidazolidine, morpholine, piperazine, piperidine, pyrazolidine, pyrrolidine, quinuclidine, and the like.

"Heterocycloalkylalkyl" by itself or as part of another substituent refers to an acyclic alkyl radical in which one of the hydrogen atoms bonded to a carbon atom, typically a terminal or *sp³* carbon atom, is replaced with a heterocycloalkyl group. Where specific alkyl moieties are intended, the nomenclature heterocycloalkylalkanyl, heterocycloalkylalkenyl, or heterocycloalkylalkynyl is used. In certain embodiments, a heterocycloalkylalkyl group is a 6- to 30-membered heterocycloalkylalkyl, *e.g.,* the alkanyl, alkenyl, or alkynyl moiety of the heterocycloalkylalkyl is 1- to 10-membered and the heterocycloalkyl moiety is a 5- to 20-membered heterocycloalkyl, and in certain embodiments, 6- to 20-membered heterocycloalkylalkyl, *e.g.,* the alkanyl, alkenyl, or alkynyl moiety of the heterocycloalkylalkyl is 1- to 8-membered and the heterocycloalkyl moiety is a 5- to 12-membered heterocycloalkyl.

"Mixture" refers to a collection of molecules or chemical substances. Each component in a mixture can be independently varied. A mixture may contain, or consist essentially of, two or more substances intermingled with or without a constant percentage composition, wherein each component may or may not retain its essential original properties, and where molecular phase mixing may or may not occur. In mixtures, the components making up the mixture may or may not remain distinguishable from each other by virtue of their chemical structure.

"Parent aromatic ring system" refers to an unsaturated cyclic or polycyclic ring system having a conjugated π (pi) electron system. Included within the definition of "parent aromatic ring system" are fused ring systems in which one or more of the rings are aromatic and one or more of the rings are saturated or unsaturated, such as, for example, fluorene, indane, indene, phenalene, *etc.* Examples of parent aromatic ring systems include, but are not limited to, aceanthrylene, acenaphthylene, acephenanthrylene, anthracene, azulene, benzene, chrysene, coronene, fluoranthene, fluorene, hexacene, hexaphene, hexalene, *as*-indacene, s-indacene, indane, indene, naphthalene, octacene, octaphene, octalene, ovalene, penta-2,4-diene, pentacene, pentalene, pentaphene, perylene, phenalene, phenanthrene, picene, pleiadene, pyrene, pyranthrene, rubicene, triphenylene, trinaphthalene, and the like.

"Parent heteroaromatic ring system" refers to a parent aromatic ring system in which one or more carbon atoms (and any associated hydrogen atoms) are independently replaced with the same or different heteroatom. Examples of heteroatoms to replace the carbon atoms include, but are not limited to, N, P, O, S, Si, *etc.* Specifically included within the definition of "parent heteroaromatic ring systems" are fused ring systems in which one or more of the rings are aromatic and one or more of the rings are saturated or unsaturated, such as, for example, arsindole, benzodioxan, benzofuran, chromane, chromene, indole, indoline, xanthene, *etc.* Examples of parent heteroaromatic ring systems include, but are not limited to, arsindole, carbazole, β-carboline, chromane, chromene, cinnoline, furan, imidazole, indazole, indole, indoline, indolizine, isobenzofuran, isochromene, isoindole, isoindoline, isoquinoline, isothiazole, isoxazole, naphthyridine, oxadiazole, oxazole, perimidine, phenanthridine, phenanthroline, phenazine, phthalazine, pteridine, purine, pyran, pyrazine, pyrazole, pyridazine, pyridine, pyrimidine, pyrrole, pyrrolizine, quinazoline, quinoline, quinolizine, quinoxaline, tetrazole, thiadiazole, thiazole, thiophene, triazole, xanthene, and the like.

"Substituted" refers to a group in which one or more hydrogen atoms are independently replaced with the same or different substituent(s). Examples of substituents include, but are not limited to, -R⁶⁴, -R⁶⁰, -O⁻, -OH, =O, -OR⁶⁰, -SR⁶⁰, -S⁻, =S, -NR⁶⁰R⁶¹, =NR⁶⁰, -CN, -CF₃, -OCN, -SCN, -NO, -NO₂, =N₂, -N₃, -S(O)₂O⁻, -S(O)₂OH, -S(O)₂R⁶⁰, -OS(O₂)O⁻, -OS(O)₂R⁶⁰, -P(O)(O⁻)₂, -P(O)(OR⁶⁰)(O), -OP(O)(OR⁶⁰)(OR⁶¹), -C(O)R⁶⁰, - C(S)R⁶⁰, -C(O)OR⁶⁰, -C(O)NR⁶⁰R⁶¹, -C(O)O⁻, -C(S)OR⁶⁰, -NR⁶²C(O)NR⁶⁰R⁶¹, - NR⁶²C(S)NR⁶⁰R⁶¹, -NR⁶²C(NR⁶³)NR⁶⁰R⁶¹, -C(NR⁶²)NR⁶⁰R⁶¹, -S(O)₂, NR⁶⁰R⁶¹, - NR⁶³S(O)₂R⁶⁰, -NR⁶³C(O)R⁶⁰, and -S(O)R⁶⁰;
wherein each -R⁶⁴ is independently a halogen; each R⁶⁰ and R⁶¹ are independently alkyl, substituted alkyl, alkoxy, substituted alkoxy, cycloalkyl, substituted cycloalkyl, heterocycloalkyl, substituted heterocycloalkyl, aryl, substituted aryl, heteroaryl, substituted heteroaryl, arylalkyl, substituted arylalkyl, heteroarylalkyl, or substituted heteroarylalkyl, or R⁶⁰ and R⁶¹ together with the nitrogen atom to which they are bonded form a heterocycloalkyl, substituted heterocycloalkyl, heteroaryl, or substituted heteroaryl ring, and R⁶² and R⁶³ are independently alkyl, substituted alkyl, aryl, substituted aryl, arylalkyl, substituted arylalkyl, cycloalkyl, substituted cycloalkyl, heterocycloalkyl, substituted heterocycloalkyl, heteroaryl, substituted heteroaryl, heteroarylalkyl, or substituted heteroarylalkyl, or R⁶² and R⁶³ together with the atom to which they are bonded form one or more heterocycloalkyl, substituted heterocycloalkyl, heteroaryl, or substituted heteroaryl rings;
wherein the "substituted" substituents, as defined above for R⁶⁰, R⁶¹, R⁶², and R⁶³, are substituted with one or more, such as one, two, or three, groups independently selected from alkyl, -alkyl-OH, -O-haloalkyl, -alkyl-NH₂, alkoxy, cycloalkyl, cycloalkylalkyl, heterocycloalkyl, heterocycloalkylalkyl, aryl, heteroaryl, arylalkyl, heteroarylalkyl, -O⁻, - OH, =O, -O-alkyl, -O-aryl, -O-heteroarylalkyl, -O-cycloalkyl, -O-heterocycloalkyl, -SH, - S⁻, =S, -S-alkyl, -S-aryl, -S-heteroarylalkyl, -S-cycloalkyl, -S-heterocycloalkyl, -NH₂, =NH, -CN, -CF₃, -OCN, -SCN, -NO, -NO₂, =N₂, -N₃, -S(O)₂O⁻, -S(O)₂, -S(O)₂OH, -OS(O₂)O⁻, -SO₂(alkyl), -SO₂(phenyl), -SO₂(haloalkyl), -SO₂NH₂, -SO₂NH(alkyl), -SO₂NH(phenyl), - P(O)(O⁻)₂, -P(O)(O-alkyl)(O⁻), -OP(O)(O-alkyl)(O-alkyl), -CO₂H, -C(O)O(alkyl), -CON(alkyl)(alkyl), -CONH(alkyl), -CONH₂, -C(O)(alkyl), -C(O)(phenyl), -C(O)(haloalkyl), -OC(O)(alkyl), -N(alkyl)(alkyl), -NH(alkyl), -N(alkyl)(alkylphenyl), -NH(alkylphenyl), -NHC(O)(alkyl), -NHC(O)(phenyl), -N(alkyl)C(O)(alkyl), and -N(alkyl)C(O)(phenyl).

As used in this specification and the appended claims, the articles "a," "an," and "the" include plural referents unless expressly and unequivocally limited to one referent.

All numerical ranges herein include all numerical values and ranges of all numerical values within the recited range of numerical values.

Described herein are compositions comprising an oligomeric silane and a substrate. In certain embodiments, the substrate is an aggregate material, and the oligomeric silane can permit better adhesion of bituminous materials to the aggregate for use in asphalt applications.

Monomeric silanes, such as aminoalkyl ethoxysilanes, have been previously described as being useful for promoting adhesion to certain sufaces, such as hydroxylcontaining surfaces on glass and plastics. Exemplary methods of producing monomeric silanes include the use of chlorosilane starting materials:

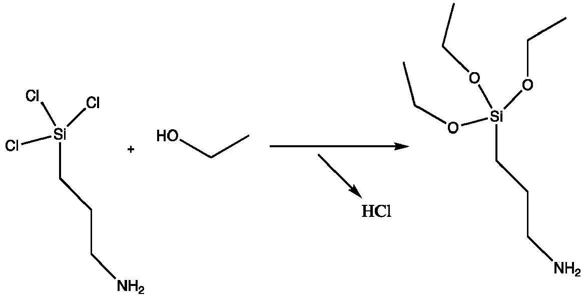

Production of monomeric aminoalkyl ethoxysilanes from chlorosilane starting materials can result in oligomeric "bottoms" remaining after distillation of the monomer, which have been traditionally disposed of as waste. Rather surprisingly, these silane oligomers represent high-boiling compounds that are particularly suitable as adhesion promoters, such as promoting the adhesion of bitumens to aggregates (*e.g*., siliceous aggregates). Oligomerization of the monomers can be catalyzed by the presence of water, which can displace chloro groups in the starting materials (or ethoxy groups in the monomer), which can then react with the silyl group of a second monomer and displace a chloro or ethoxy group to create a dimer. These dimers may be stable, or may react (via other free hydroxyl groups) with other monomers to create trimers, tetramers, etc.

In accordance with the invention, the oligomeric silanes are selected from compounds of Formula I: 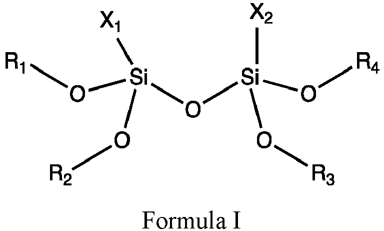 wherein
X₁, X₂, and X₃ are independently selected from haloalkyl, alkylaminoalkyl, and aminoalkyl, each of which is optionally substituted; and
R₁, R₂, R₃, R₄, R₅, and R₆ are, independently for each occurrence, selected from hydrogen, optionally substituted alkyl, and a residue of Formula II: 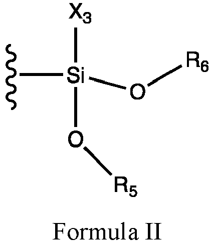
and salts thereof (*e.g*., aminic salts).

In certain embodiments at least one of R₁, R₂, R₃, or R₄ is a residue of Formula II. In certain embodiments, R₁, R₂, R₃, and R₄ are each independently selected from hydrogen and optionally substituted C₁-C₁₀ alkyl (*e.g*., methyl, ethyl, propyl, etc.). In certain embodiments, R₁, R₂, R₃, and R₄ are each ethyl. In certain embodiments, R₁, R₂, R₃, and R₄ are unsubstituted. In certain embodiments, X₁, X₂, and X₃ are independently selected from chloroalkyl and aminoalkyl, each of which is optionally substituted. In certain embodiments, X₁, X₂, and X₃ are independently selected from aminoalkyl, such as aminopropyl. In certain embodiments, X₁, X₂, and X₃ are unsubstituted. In certain embodiments, the compound of Formula I is selected from compounds of Formula III: 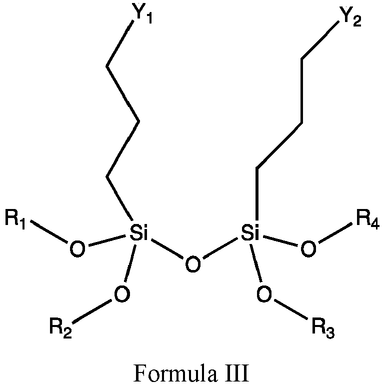 wherein
Y₁ and Y₂ are independently selected from halo and -NH₂.

Exemplary oligomeric silanes include, but are not limited to: 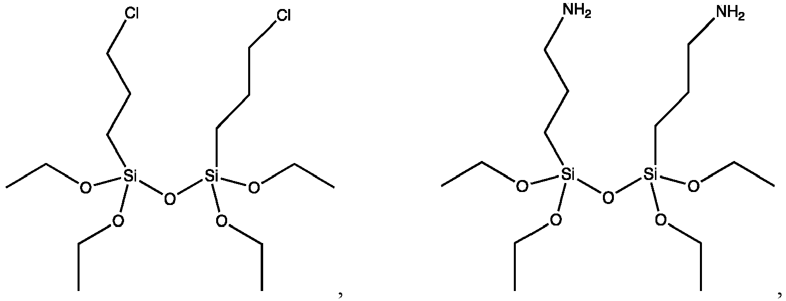 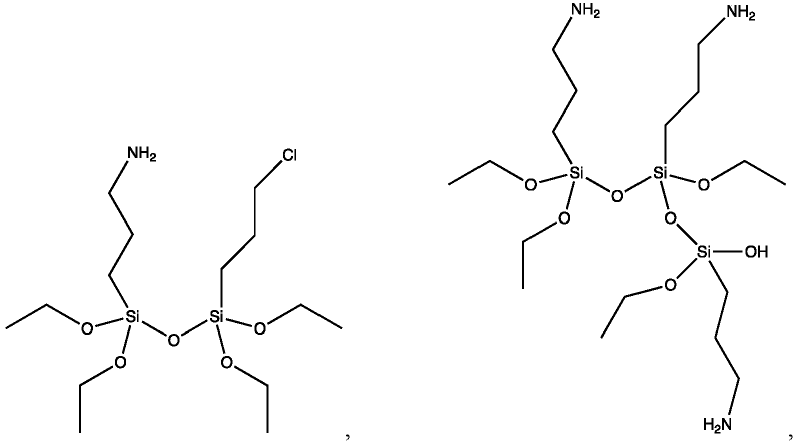 and

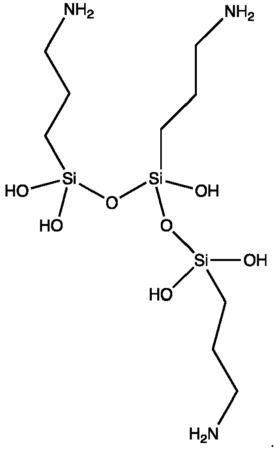

As noted above, the compounds of Formula I may exist in salt form. For example, salts may be formed at one or more of any amine residues that may exist in such compounds. In certain embodiments, for example, the synthesis of aminoalkyl ethoxysilanes in the method above will generate HCl as a byproduct, which can catalyze the formation of amine hydrochloride salts of the oligomeric silanes described herein. Exemplary oligomeric silane hydrochloride salts include, but are not limited to: 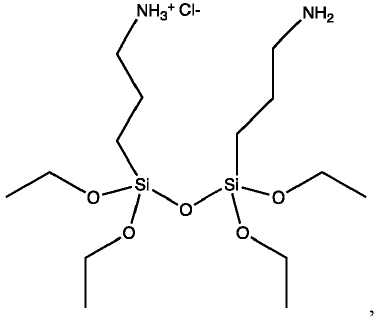 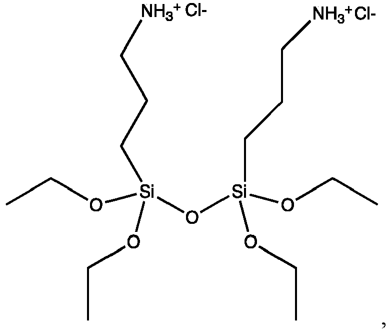 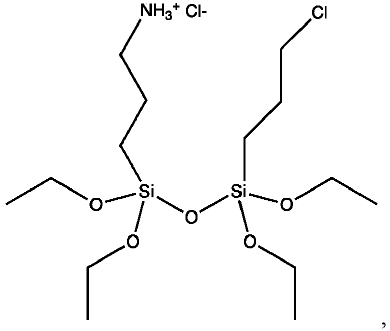 and

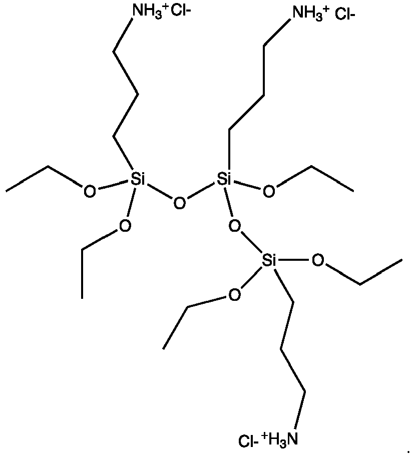

Methods for obtaining the compounds and novel compositions described herein will be apparent to those of ordinary skill in the art, suitable procedures being described, for example, in the examples below, and in the references cited herein.

In all of the foregoing examples, the compounds described may be useful alone, as mixtures, or in combination with other compounds, compositions, and/or materials.

### EXAMPLES

### Example 1

### Samples With Oligomeric Silane Adhesion Promoter

To 500g of a high silica (>99%) sand was added 2.0 wt. % water. To this wetted sand was added 8.0 wt. % of an asphalt composition containing 74.5 wt. % gelled asphalt and 25.0% fuel oil, to which was added 0.5 wt. % of the oligomeric alkoxysilane. The mixture was stirred to coat the aggregate with the asphalt composition for 3 minutes. The resulting mixture was observed and given a visual rating as to the percentage of coverage of the aggregate with asphalt. The initial coverage amount was rated at about 100%. The mixture was allowed to cure at room temperature for 16 to 24 hrs, prior to testing via a modified Texas boil test.

250g of the coated sand sample was placed into a 1000mL beaker containing 700mL of boiling water. The sample was allowed to remain in the soft boiling water for a period of 5 minutes, before being passed over a screen to remove the sample from the water. The filtered sample was again given a visual rating after sitting overnight (about 12hrs) as to the percentage of coverage of the aggregate with asphalt. The coverage amount remained at about 100%.

### Without Adhesion Promoter

To 500g of a high silica (>99%) sand was added 2.0 wt. % water. To this wetted sand was added 8.0 at. % of an asphalt composition containing 75 wt. % gelled asphalt and 25 wt. % fuel oil. The mixture was stirred to coat the aggregate with the asphalt composition for 3 minutes. The resulting mixture was observed and given a visual rating as to the percentage of coverage of the aggregate with asphalt. The initial coverage amount was rated at about 100%. The mixture was allowed to cure at room temperature for 16 to 24 hrs, prior to testing via a modified Texas boil test.

250g of the coated sand sample was placed into a 1000 mL beaker containing 700 mL of boiling water. The sample was allowed to remain in the soft boiling water for a period of 5 minutes, before being passed over a screen to remove the sample from the water. The filtered sample was again given a visual rating after sitting overnight (about 12 hrs) as to the percentage of coverage of the aggregate with asphalt. The coverage amount was reduced to about 0%.

### Example 2

A hot mix asphalt study was conducted to observe stripping potential between two different adhesion promoters. A mix design was prepared following Asphalt Institute's MS-2, Mix Design Manual, 7^{th} edition. The design trial targeted volumetric standards for siliceous aggregates. After the trial produced aggregates having the appropriate volumetrics, testing method ASTM D4867, Effect of Moisture on Asphalt Concrete Paving Mixtures, was performed.

For the aggregate structure of the mix, granite aggregates high in silica content were used for this study. These aggregates are low in absorption and prone to stripping, so they are helpful in identifying effective adhesion promoters.

The two different adhesion promoters were introduced into the asphalt binders and mixed thoroughly before producing compacted specimens. The oligomeric silane adhesion promoter was compared to the commercially available Akzo Nobel product, Wet-fix.

ASTM D4867 identifies stripping potential by introducing moisture into a compacted mix sample through a vacuum chamber. Once the specimen has achieved a targeted saturation level, the saturated specimen it put it through a freeze-thaw cycle. The freeze-thaw cycle allows the saturated specimen to be frozen and then thawed by a 60°C water bath. This simulates weather patterns within certain regions that a road could experience. A tensile-strength ratio (TSR) above 70% is usually considered resistant to stripping. Blend volumetrics for the aggregate are outlined in Tables 1-3, with % Passing: Sieve Size charted in FIG. 1. ASTM D4867 stripping results for the Wet-Fix and oligomeric silane agents are reported in Table 4.

**Table 1**

| | Aggregate Blend | | | |
|---|---|---|---|---|
| | NY #1 | NY #1A | NY Screenings | Baghouse |
| | 18.5% | 11.5% | 69.0% | 1.0% |
| G_{sb}: | 2.650 | 2.658 | 2.641 | 2.800 |
| Abs: | 0.42 | 0.39 | 0.71 | 1.00 |

**Table 2**

| Sieve Size | Blend Gradation |
|---|---|
| 25.0 | 100.0 |
| 19.0 | 100.0 |
| 12.5 | 98.1 |
| 9.5 | 90.9 |
| 4.75 | 74.5 |
| 2.36 | 59.0 |
| 1.18 | 45.2 |
| 0.6 | 33.1 |
| 0.3 | 22.8 |
| 0.15 | 14.7 |
| 0.075 | 9.3 |
| Combined Blend G_{sb}: | 2.646 |
| Combined Blend A_{bs}: | 0.62 |

**Table 3**

| Blend: | AC: | Gₘₘ: | G_{mb}: | Air voids: | VMA: |
|---|---|---|---|---|---|
| T1 | 5.8 | 2.443 | 2.358 | 3.5 | 16.1 |
| | | | | | |
| Average: | 5.8 | 2.443 | 2.358 | 3.5 | 16.1 |

**Table 4**

| Blend: | AC: | Gₘₘ: | G_{mb} : | Air voids: | Saturation: | Wet Str: | Dry Str: | TSR: |
|---|---|---|---|---|---|---|---|---|
| Wet Fix TSR | 5.8 | 2.443 | 2.266 | 7.2 | 74.2 | 44.2 | | 77.7 |
| | 5.8 | | 2.274 | 6.9 | N/A | | 56.9 | |
| Average: | 5.8 | 2.443 | 2.270 | 7.1 | | | | |

| Blend: | AC: | Gₘₘ: | G_{mb} : | Air voids: | Saturation: | Wet Str: | Dry Str: | TSR: |
|---|---|---|---|---|---|---|---|---|
| Oligomeric Silane TSR | 5.8 | 2.443 | 2.283 | 6.5 | 75.2 | 69.5 | | 115.8 |
| | 5.8 | | 2.297 | 6.0 | N/A | | 60.0 | |
| Average: | 5.8 | 2.443 | 2.290 | 6.3 | | | | |

G_{sb} = bulk specific gravity; G_{mb} = bulk specific gravity of mixture; Gₘₘ = theoretical maximum specific gravity; AC = asphalt concrete; VMA = voids in mineral aggregate; abs = absorbtivity.

## Claims

1. A asphalt binder composition, comprising:
at least one oligomeric silane;
a bituminous material;
wherein the oligomeric silane comprises at least one compound of Formula I: 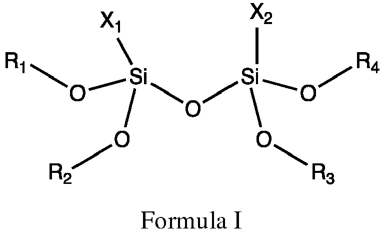
wherein
X₁, X₂, and X₃ are independently selected from haloalkyl, alkylaminoalkyl, and aminoalkyl, each of which is optionally substituted; and
R₁, R₂, R₃, R₄, R₅, and R₆ are, independently for each occurrence, selected from hydrogen, optionally substituted alkyl, and a residue of Formula II: 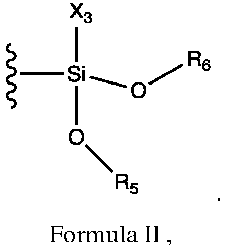
and salts of Formula I.

2. The composition of claim 1, wherein at least one of R₁, R₂, R₃, or R₄ is a residue of Formula II.

3. The composition according to claim 1, wherein R₁, R₂, R₃, and R₄ are each independently selected from hydrogen and optionally substituted C₁-C₁₀ alkyl.

4. The composition according to any one of the preceding claims, wherein R₁, R₂, R₃, and R₄ are each ethyl.

5. The composition according to any one of the preceding claims, wherein X₁, X₂, and X₃ are independently selected from chloroalkyl and aminoalkyl, each of which is optionally substituted.

6. The composition according to any one of the preceding claims, wherein X₁, X₂, and X₃ are independently selected from aminoalkyl.

7. The composition according to any one of the preceding claims, wherein X₁, X₂, and X₃ are aminopropyl.

8. The composition according to any one of the preceding claims, wherein the compound of Formula I is selected from compounds of Formula III: 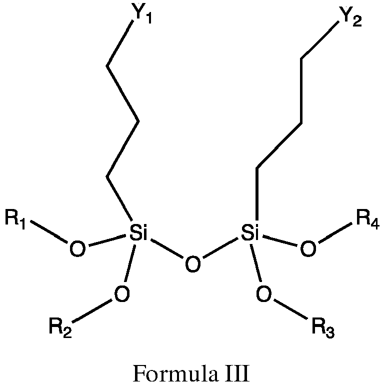 wherein
Y₁ and Y₂ are independently selected from halo and -NH₂.

9. The composition of claim 8, wherein Y₁ and Y₂ are independently selected from chloro and -NH₂.

10. The composition of claim 8, wherein Y₁ and Y₂ are -NH₂.

11. The composition according to any one of the preceding claims, wherein the oligomeric silane comprises at least one of: 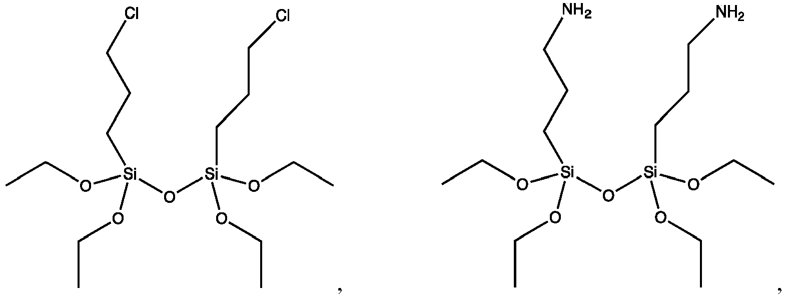 or

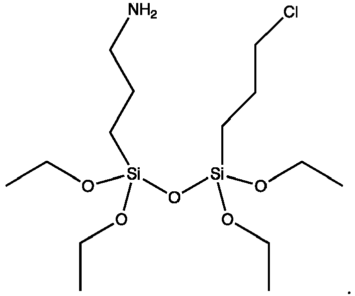

12. The composition according to any one of the preceding claims, wherein the oligomeric silane comprises a salt of an oligomeric silane.

13. The composition of claim 12, wherein the oligomeric silane salt comprises an amine salt.

14. The composition of claim 13, wherein the oligomeric silane salt comprises a hydrochloride salt.

## Patentansprüche

1. Asphaltbinderzusammensetzung, umfassend:
mindestens ein oligomeres Silan;
ein bitumenhaltiges Material;
wobei das oligomere Silan mindestens eine Verbindung der Formel I umfasst: 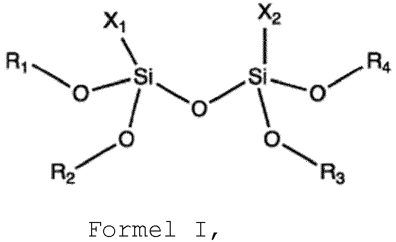
wobei
X₁, X₂ und X₃ unabhängig aus Haloalkyl, Alkylaminoalkyl und Aminoalkyl ausgewählt sind, von denen jedes optional substituiert ist; und
R₁, R₂, R₃, R₄, R₅ und R₆ unabhängig für jedes Auftreten aus Wasserstoff, optional substituiertem Alkyl und einem Rest der Formel II ausgewählt sind: 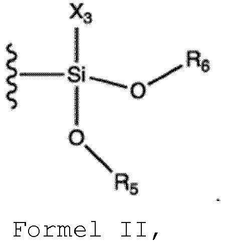
und Salze der Formel I.

2. Zusammensetzung nach Anspruch 1, wobei mindestens eines von R₂, R₂, R₃ oder R₄ ein Rest der Formel II ist.

3. Zusammensetzung nach Anspruch 1, wobei R₂, R₂, R₃ und R₄ jeweils unabhängig aus Wasserstoff und optional substituiertem C₁-C₁₀-Alkyl ausgewählt sind.

4. Zusammensetzung nach einem der vorhergehenden Ansprüche, wobei R₁, R₂, R₃ und R₄ jeweils Ethyl sind.

5. Zusammensetzung nach einem der vorhergehenden Ansprüche, wobei X₁, X₂ und X₃ unabhängig aus Chloralkyl und Aminoalkyl ausgewählt sind, von denen jedes optional substituiert ist.

6. Zusammensetzung nach einem der vorhergehenden Ansprüche, wobei X₁, X₂ und X₃ unabhängig aus Aminoalkyl ausgewählt sind.

7. Zusammensetzung nach einem der vorhergehenden Ansprüche, wobei X₁, X₂ und X₃ Aminopropyl sind.

8. Zusammensetzung nach einem der vorhergehenden Ansprüche, wobei die Verbindung der Formel I aus Verbindungen der Formel III ausgewählt ist: 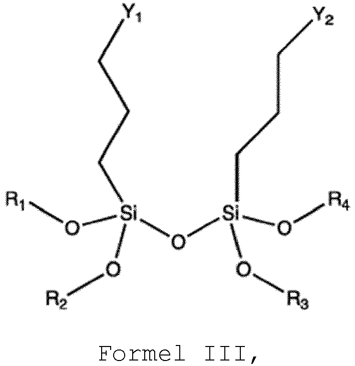 wobei
Y₁ und Y₂ unabhängig aus Halo und -NH₂ ausgewählt sind.

9. Zusammensetzung nach Anspruch 8, wobei Y₁ und Y₂ unabhängig aus Chlor und -NH₂ ausgewählt sind.

10. Zusammensetzung nach Anspruch 8, wobei Y₁ und Y₂ -NH₂ sind.

11. Zusammensetzung nach einem der vorhergehenden Ansprüche, wobei das oligomere Silan mindestens eines der folgenden umfasst: 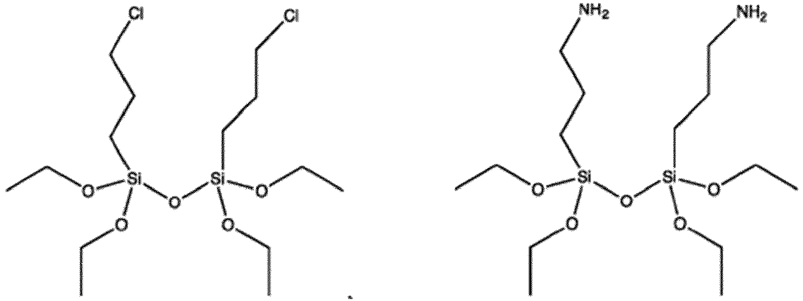 oder

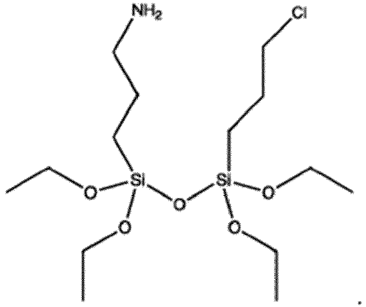

12. Zusammensetzung nach einem der vorhergehenden Ansprüche, wobei das oligomere Silan ein Salz eines oligomeren Silans umfasst.

13. Zusammensetzung nach Anspruch 12, wobei das oligomere Silansalz ein Aminsalz umfasst.

14. Zusammensetzung nach Anspruch 13, wobei das oligomere Silansalz ein Hydrochloridsalz umfasst.

## Revendications

1. Composition de liant asphaltique, comprenant :
au moins un silane oligomère ;
un matériau bitumineux ;
dans laquelle le silane oligomère comprend au moins un composé selon la Formule I : 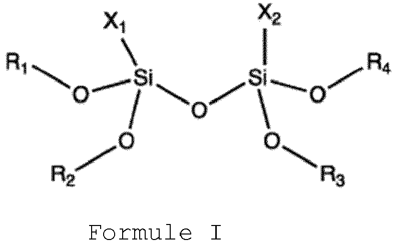
dans laquelle
X₁, X₂ et X₃ sont sélectionnés indépendamment parmi des groupes haloalkyle, alkylaminoalkyle et aminoalkyle, chacun d'entre eux étant optionnellement substitué ; et
R₁, R₂, R₃, R₄, R₅ et R₆ sont, indépendamment pour chaque occurrence, sélectionnés parmi un atome d'hydrogène, un groupe alkyle optionnellement substitué, et un résidu selon la Formule II : 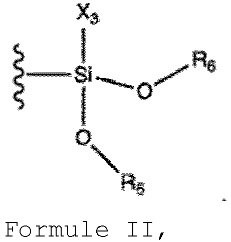
et des sels selon la Formule I.

2. Composition selon la revendication 1, dans laquelle au moins l'un de R₂, R₂, R₃ ou R₄ est un résidu selon la Formule II.

3. Composition selon la revendication 1, dans laquelle R₁, R₂, R₃ et R₄ sont chacun sélectionné indépendamment parmi un atome d'hydrogène et un groupe alkyle C₁-C₁₀ optionnellement substitué.

4. Composition selon l'une quelconque des revendications précédentes, dans laquelle R₁, R₂, R₃ et R₄ sont chacun un groupe éthyle.

5. Composition selon l'une quelconque des revendications précédentes, dans laquelle X₁, X₂ et X₃ sont sélectionnés indépendamment parmi des groupes chloroalkyle et aminoalkyle, chacun d'entre eux étant optionnellement substitué.

6. Composition selon l'une quelconque des revendications précédentes, dans laquelle X₁, X₂ et X₃ sont sélectionnés indépendamment parmi des groupes aminoalkyle.

7. Composition selon l'une quelconque des revendications précédentes, dans laquelle X₁, X₂ et X₃ sont des groupes aminopropyle.

8. Composition selon l'une quelconque des revendications précédentes, dans laquelle le composé selon la Formule I est sélectionné parmi des composés selon la Formule III : 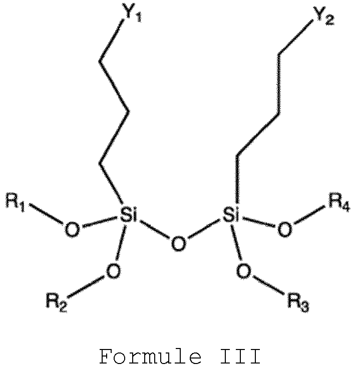 dans laquelle
Y₁ et Y₂ sont sélectionnés indépendamment parmi des groupes halo et -NH₂.

9. Composition selon la revendication 8, dans laquelle Y₁ et Y₂ sont sélectionnés indépendamment parmi des groupes chloro et -NH₂.

10. Composition selon la revendication 8, dans laquelle Y₁ et Y₂ sont des groupes -NH₂.

11. Composition selon l'une quelconque des revendications précédentes, dans laquelle le silane oligomère comprend au moins l'un de : 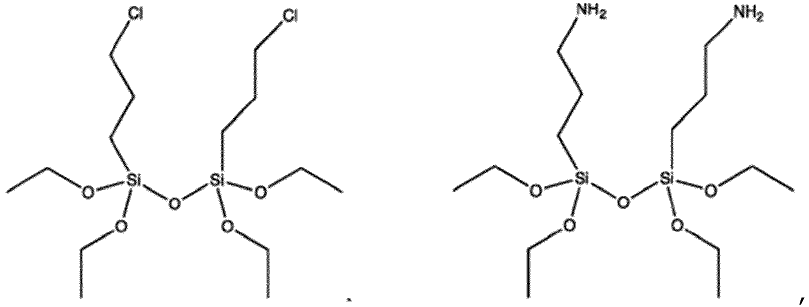 ou

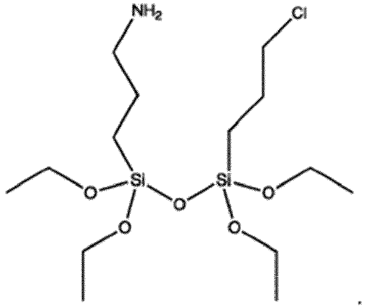

12. Composition selon l'une quelconque des revendications précédentes, dans laquelle le silane oligomère comprend un sel d'un silane oligomère.

13. Composition selon la revendication 12, dans laquelle le sel de silane oligomère comprend un sel d'amine.

14. Composition selon la revendication 13, dans laquelle le sel de silane oligomère comprend un sel chlorhydrate.
